# NEUE EUROPÄISCHE PATENTSCHRIFT

(11) **EP 1 284 229 B3**
(45) Veröffentlichungstag dieser Patentschrift: **12.12.2012**
(45) Hinweis auf die Patenterteilung: 27.04.2005
(21) Anmeldenummer: 02018069.1
(22) Anmeldetag: 13.08.2002
(51) Int. Cl.: B65G 49/06, C03B 33/03

(54) **Verfahren und Vorrichtung zum Bearbeiten von Glastafeln**
Process and apparatus for handling glass sheets
Procédé et appareil de manipulation des feuilles de verre

(30) Priorität: 13.08.2001 DE 10139715
(43) Veröffentlichungstag der Anmeldung: 19.02.2003
(73) Patentinhaber: HEGLA GmbH & Co. KG, 37688 Beverungen (DE)
(72) Erfinder: Rotermund,Christian, Dipl.-Ing., 37671 Höxter (DE)
(74) Vertreter: Solf, Alexander

(56) Entgegenhaltungen:
- EP-A- 0 048 334
- EP-A- 0 341 673
- EP-A- 1 323 651
- US-A1- 2003 127 484
- PATENT ABSTRACTS OF JAPAN vol. 2002, no. 05, 3. Mai 2002 (2002-05-03) -& JP 2002 019959 A (ISHIKAWAJIMA HARIMA HEAVY IND CO LTD), 23. Januar 2002 (2002-01-23)

## Beschreibung

Die Erfindung betrifft ein Verfahren und eine Vorrichtung zum Bearbeiten von Glastafeln.

Für Isoliergläser werden aus Glasrohtafeln auf Schneidanlagen Einzelscheiben für Isolierglaseinheiten zugeschnitten. Isoliergläser sind aus mindestens zwei Scheiben zusammengesetzt, bestehend aus einer ersten äußeren Scheibe, welche in der Regel beschichtet ist, und einer zweiten inneren Scheibe, welche unbeschichtet ist. Zur Herstellung von Isolierglas wird zunächst eine Glasrohtafel, welche beschichtet ist, einer Schneidanlage zugeführt und dort entsprechend einem vorgegebenen Schneidprogramm in Einzelscheiben aufgeteilt. Die Glasrohtafeln weisen z. B. eine Länge von 6,0 m und eine Breite von 3,21 m auf. Die Aufteilung von Glasrohtafeln erfolgt durch Schneiden bzw. Ritzen, wodurch eine Sollbruchstelle erzeugt wird, und anschließendes Brechen. In einer sogenannten Brechanlage wird quer zur Längserstreckung der Glasrohtafel und in einer sich anschließenden automatisierten sogenannten X- und Y-Brechanlage oder manuell in Längsrichtungen der Glasrohtafel gebrochen. Dabei fallen Restglastafeln an.

Anschließend werden Glasrohtafeln, welche unbeschichtet sind, mit dem gleichen Schneidprogramm in Einzelscheiben aufgeteilt, so dass zu jeder beschichteten Scheibe eine gleich ausgebildete unbeschichtete Scheibe vorliegt. In nachgeordneten Sortiersystemen werden die Scheiben zunächst gelagert und danach bei einer Isolierglaserzeugung zusammengesetzt.

Eine Bearbeitungslinie für das Aufteilen weist in der Regel die Module Lagerung, Beschickung, Schneiden, Brechen und Sortieren/Lagern auf.

Zur Bearbeitung von Kundenaufträgen, welche bestimmte Scheibenformate umfassen, werden Glasrohtafeln aufgrund einer Arbeitsvorbereitung nach Glassorten sortiert und zur möglichst verschnittarmen Materialausnutzung flächenoptimierte Muster berechnet. Hierbei werden z.B. 100 bis 150 Einzelscheiben, die aus den Glastafeln geschnitten werden sollen, pro Optimierungslauf auf eine möglichst enge Fläche verteilt zu einem Schneidmuster zusammengefasst. Die Schneidmuster werden dann den entsprechenden Glastafeln zugeordnet und die Steuer- und Organisationsdaten an die Schneidmaschine übertragen. An der Schneidmaschine erfolgt dann die Abarbeitung der einzelnen Optimierungsläufe und das Sortieren nach vorgegebenen Kriterien. Bei jedem Optimierungslauf entsteht in der Regel am Ende eine sogenannte Restglastafel. Diese meist unterschiedlich großen Restglastafeln werden über Fördereinrichtungen der Bearbeitungslinie zu einem Kipptisch gefördert. Auf diesem Kipptisch werden die Restglastafeln dann aufgestelit und mit einem Sauggerät in ein Lagersystem eingelagert, wofür sog. A-Gestelle, Schubfachlager oder sonstige Kompakttagertechniken verwendet werden. Für die gängigsten unterschiedlichen Glassorten benötigt man in der Regel ca. 15-20 Stellplätze für Restglastafeln. Da die Restglastafeln unterschiedlich groß sind, müssen sie mit Abstand voneinander gelagert werden, da sie andernfalls aufgrund ihrer unterschiedlichen Größe aneinander stoßen und mit ihren Kanten Verkratzungsschäden verursachen.

Restglastafeln werden meist über Einzelschneidanlagen weiter verarbeitet. Die Weiterverarbeitung erfolgt aber in der Regel nur, wenn aufgrund von ungewolltem Bruch oder Beschädigungen in der Bearbeitungslinie Nachschnitte notwendig werden. Derartige Zuschnitte von Restglastafeln sind nur schwer steuerbar, so dass zwar eine Nutzung der Restglastafeln stattfindet, die jedoch bezogen auf die zur Verfügung stehende Restglasfläche nicht optimierbar ist. Darüber hinaus ist das Aussortieren der Restglastafeln und das Verbringen zu einem Einzelschneidtisch sehr aufwendig. Durch den hohen Aufwand ist es nicht lohnend, die Restglastafeln in den Betriebsablauf zurückzuführen, so dass die Restglastafeln häufig verworfen werden. Eine ganzheitliche, d. h. auch die Restglastafeln einbeziehende Fertigungssteuerung konnte bisher nicht automatisiert gewährleistet werden. Bisher wurde ein hoher Aufwand für das Restglastafelhandling getrieben, wobei die Restglastafelentsorgung Stilistandszeiten der Schneidlinien verursachen, für die Restelagerung und deren separaten Zuschnitt ein hoher Platz- und Anlagenbedarf erforderlich ist und zudem eine hohe Ausschussquote der Restglastafeln durch Verkratzen, insbesondere bei beschichteten Restglastafeln, auftritt.

In der europäischen Patentanmeldung 0 048 334 A1 wird eine Vorrichtung zum Sortieren von unsortierten Glasscheiben einer Glasschneideanlage beschrieben. Die Vorrichtung weist senkrechte Fächer zur sortierten Aufnahme jeweils einer Glasscheibe auf. einen längs des Fächergestells verfahrbaren Verschiebewagen mit einer Übergabevorrichtung zur Übergabe der Glasscheibe an ein Fach des Fächergestells, sowie eine Sleuervorrichtung, um jede Glasscheibe einem bestimmten Fach des Fächergestells zuzuordnen, wobei sie mindestens einen Fächerwagen mit senkrechten Fächern zur fortlaufenden Annahme der unsortierten Glasscheiben aufweist, derauf dem Verschiebewagen abstellbar ist, wobei die Steuervorrichtung so ausgebildet ist, dass sie jede Glasscheibe des Fächerwagens einem bestimmten Fach des Fächergestells zuordnet.

Aufgabe der Erfindung ist, ein Verfahren zum Bearbeiten von Glastafeln anzugeben, bei welchem Glasrohtafeln und Restglastafeln optimal gemeinsam genutzt, eine ganzheitliche Fertigungssteuerung erreicht und der Ausschuss und der Aufwand verringert werden können.

Diese Aufgabe wird mit einem Verfahren mit den Merkmalen der Ansprüche 1 oder 10 gelöst.

Es ist eine weitere Aufgabe, eine Vorrichtung anzugeben, mit der die Bearbeitung von Glasroh- und Restglastafeln effektiver, kostengünstiger und mit weniger Aufwand durchgeführt werden kann.

Diese Aufgabe wird mit einer Vorrichtung mit den Merkmalen des Anspruchs 12 gelöst.

Erfindungsgemäß wird in die Bearbeilungslinie eine Zwischenspeichervorrichtung, bestehend vorzugsweise aus einer Beschikkungseinrichtung und einer Lagereinrichtung, eingefügt, so dass Glastafeln, d. h. Glasroh- und/oder Restglastafeln, im Zwischenspeicherz.B. puffernd gelagert werden können und damit der gesamte Aufteilungsprozess weitestgehend optimierbar ist. Damit können insbesondere Restglastafeln optimal genutzt werden. Die Anordnung der Beschickungseinrichtung erfolgt beispielsweise hinter der Schneidstation, z.B. zwischen Schneidstation und Brechvorrichtung oder vor der Schneidstation. Die Beschickungseinrichtung kann Glastafeln, insbesondere Restglastafeln, in einfacher Weise der Schneidlinie entnehmen und diese Glastafeln vorzugsweise oberhalb der Brechvorrichtung und/oder der Schneidanlage in speziell ausgebildeten, als Lagereinrichtung dienenden Regalen ablegen. Die Position der Lagereinrichtung der Zwischenspeichervorrichtung über der Schneidanlage oder einem Schneidanlagensystem bestehend aus mehreren kombinierten Schneidanlagen ist beliebig. Die Anordnung der Lagereinrichtung oberhalb der Bearbeitungslinie hat dabei den Vorteil, dass keine zusätzlichen Hallenflächen benötigt werden. Beispielsweise wird bei einem nachfolgenden Aufteilungszyklus eine Glastafel aus der erfindungsgemäßen Lagereinrichtung entnommen und der Bearbeitungslinie zugeführt, wobei die Glastafeln bezüglich Glasart, Lagerort und Tafelgröße von einem Rechner derart erfasst werden, dass der Rechner bei den Optimierungsberechnungen die vorhandenen Glastafeln berücksichtigt. Der oben beschriebene Verfahrensablauf kann auch so ablaufen, dass eine Restglastafel als erste Glastafel im Fertig ungsprozess für eine spezielle Glastafelsorte verwendet wird. Da die Beschickungseinrichtung innerhalb der Schneidanlage angeordnet ist, kann sie auf ein Niveau unterhalb der Glastafelauflageeinrichtungen abtauchen.

Die Erfindung wird anhand einer Zeichnung beispielhaft erfäutert. Es zeigen:
- Fig. 1: schematisch eine Anlage zum Bearbeiten von Glastafein in einer Draufsicht,
- Fig. 2: eine Zuschnittsoptimierung für die Bearbeitung von Glasrohtafeln nach dem Stand der Technik,
- Fig. 3: eine mögliche erfindungsgemäße Zuschnittsoptimierung,
- Fig. 4: eine erfindungsgemäße Vorrichtung in einer seitlichen schematisierten Ansicht,
- Fig. 5 bis Fig. 10: eine erfindungsgemäße Vorrichtung in Seitenansicht mit einem einfachen Aufnahmetisch sowie einen erfindungsgemäßen Verfahrensablauf in Seitenansicht,
- Fig. 11 bis Fig. 16: eine erfindungsgemäße Vorrichtung in Seitenansicht mit einem Doppelaufnahmetisch sowie einen weiteren erfindungsgemäßen Verfahrensablauf,
- Fig. 17 bis Fig. 20: eine erfindungsgemäße weitere Vorrichtung in Seitenansicht, wobei die Beschickungseinrichtung vor der Schneidlinie angeordnet ist, sowie einen weiteren erfindungsgemäßen Verfahrensablauf.
- Fig. 21 und Fig. 22: eine Draufsicht auf zwei Schneidanlagen mit Zwischenspeichervorrichtung, die mit einem verfahrbaren Auflagekipptisch miteinander gekoppelt sind sowie
- Fig. 23 und Fig. 24: eine Draufsicht auf zwei Schneidanlagen mit Zwischenspeichervorrichtung die mit einem verfahrbaren Auflagekipptisch miteinander gekoppelt sind, wobei zwei Lagereinrichtungen vorhanden sind.

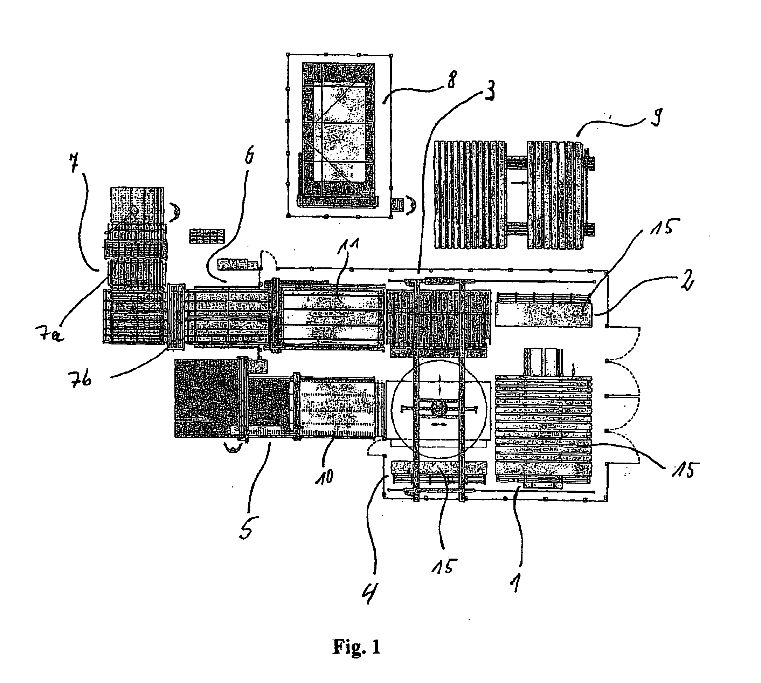

Eine Vorrichtung zum Bearbeiten von Glasrohtafeln 15 weist gemäß Fig. 1 z.B. Glaslager 1, 2, 4, sowie einen Portalbeschicker 3 zum Versetzen der Glasrohtafeln 15, eine Verbundglasschneidbrechanlage 5, eine Schneidvorrichtung 6 für Floatglas sowie eine Brechvorrichtung 7 dafür auf. Die Brechvorrichtung 7 besteht aus einer sog. X-Brechanlage 7a und einer sog. Y-Brechanlage 7b. Ferner umfasst sie einen Einzelschneidplatz 8 und ein zusätzliches Glaslager 9.

In einer derartigen Vorrichtung werden aus einem Lager 1 die Scheiben zur Entnahme durch den Portalbeschicker 3 in Kompaktläger 2, 4 überführt und von dort mit dem Portalbeschicker 3 entweder der Verbundglasschneidanlage 5 oder der Schneidvorrichtung 6 für Floatglas aufgegeben, wobei die Scheiben auf entsprechende Bearbeitungstische 10, 11 gekippt flach über einen Aufgabetisch auf diesen aufliegend in die Verbundglasschneidanlage 5 oder Zuschneidvorrichtung 6 verschoben werden. In der Schneidvorrichtung 6 werden die Glasrohtafeln 15 angeritzt und somit mit entsprechenden Sollbruchstellen versehen und gelangen anschließend in die Brechvorrichtung 7.

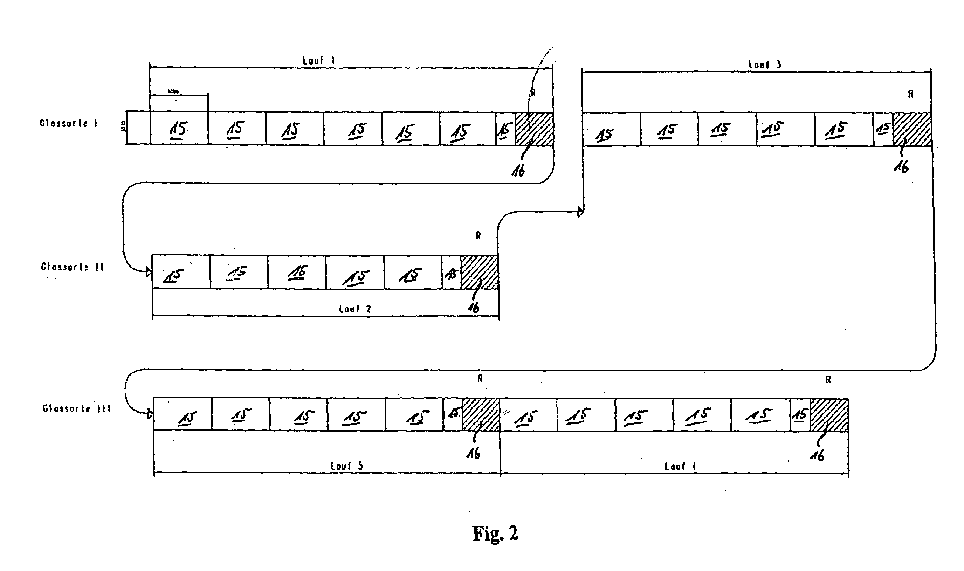

In Fig. 1 ist eine Vorrichtung nach dem Stand der Technik dargestellt, wobei beispielsweise eine vorbestimmte Glassorte dem Lager 1 entnommen, mit dem Portalbeschicker 3 verfahren und auf den Bearbeitungstisch 11 gelegt und anschließend in die Schneidanlage gefahren wird. Hat das Optimierungsprogramm beispielsweise ermittelt, dass für die benötigten bzw. ermittelten Schneidmuster (Fig. 2) Glasrohtafeln 15 benötigt werden, werden diese Glasrohtafeln 15 der ersten Glassorte vom Beschicker 3 den Glaslagern 1, 2, 4 entnommen und auf den Bearbeitungstisch 11 aufgelegt. Anschließend erfolgt das Schneiden in der Schneidvorrichtung 6 und das Brechen in der Brechvorrichtung 7. Von der letzten Glasrohtafel 15 wird jedoch nur ein Teil geschnitten, der restliche Teil verbleibt als Restglastafel 16 (Fig. 2). Diese Restglastafel 16 wird in ein Restelager verfahren. Anschließend folgt beispielsweise eine zweite andere Glassorte (Fig. 2, mittlere Reihe), bei der in gleicher Weise verfahren wird. Danach wird beispielsweise wieder die erste Glassorte bearbeitet, wobei der Ablauf der gleiche ist, wie bei der ersten Glassorte, und wiederum eine Restglastafel 16 verbleibt.

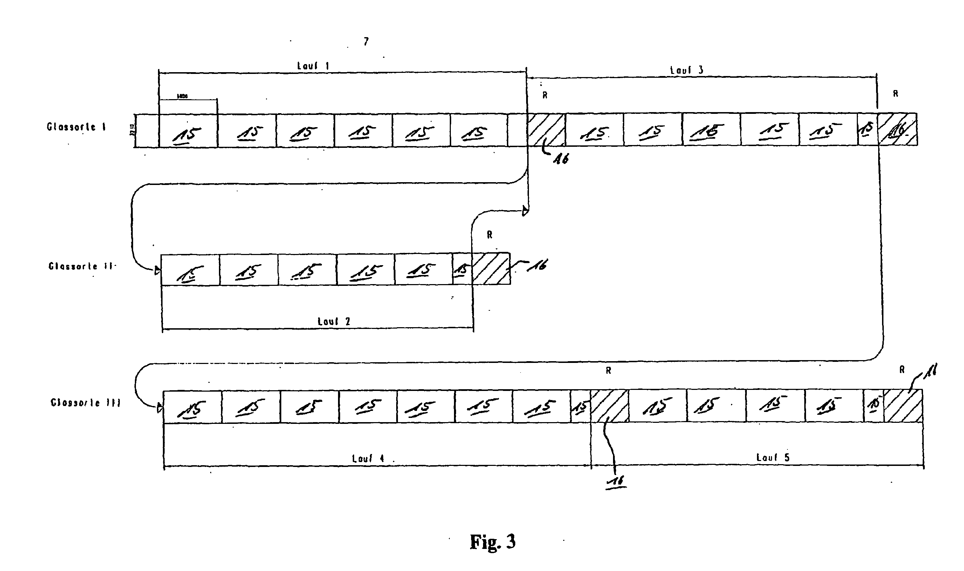

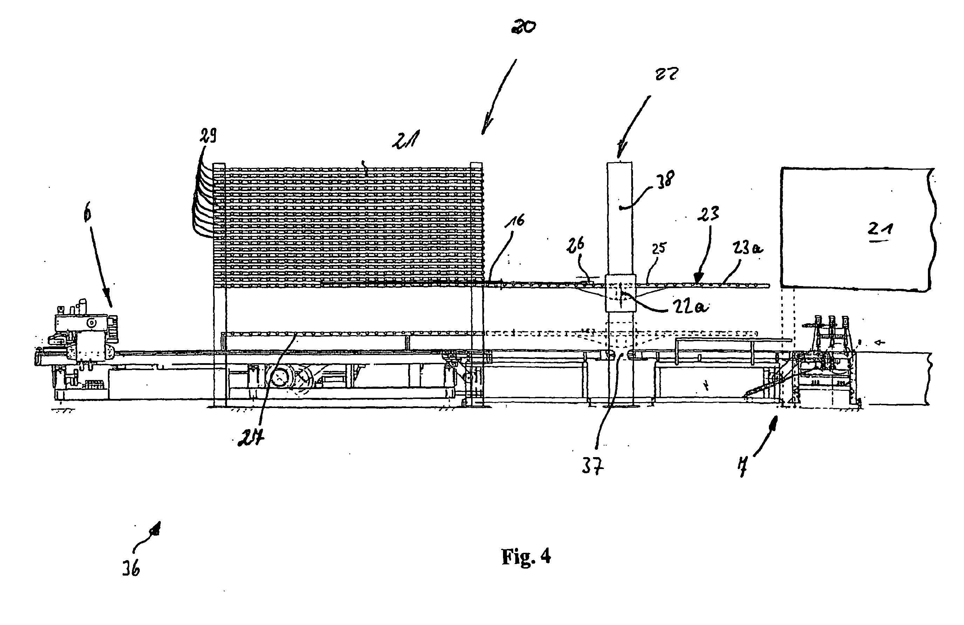

Bei einer Ausführungsform des erfindungsgemäßen Verfahrens, welches in Fig. 3 dargestellt ist, wird ebenfalls ein Schneidmuster auf zuzuschneidende Glasrohtafeln hin optimiert, wobei nach dem Schneiden der ersten Glassorte (Fig. 3, oberste Reihe) im ersten Lauf ebenfalls eine Restglastafel 16 verbleibt. Diese Restglastafel 16 kommt in die erfindungsgemäße Zwischenspeichervorrichtung 20 (Fig. 4). Anschließend wird die zweite Glassorte geschnitten, wobei auch bei diesem Durchlauf eine Restglastafel 16 verbleibt, die ebenfalls in die Zwischenspeichervorrichtung 20 verbracht wird. Danach erfolgt beispielsweise wieder ein Lauf der ersten Glassorte. Efindungsgemäß wird die zuvor im ersten Lauf der ersten Glassorte angefallene Restglastafel 16 in die Berechnung der Zuschnittsoptimierung mit eingebracht und vorzugsweise gleich als erste Glasplatte mit einem von einem Rechner ermittelten Schneidmuster in die Schneidanlage eingelegt, dort geritzt und anschließend in der Brechvorrichtung 7 in die Einzelscheiben zerlegt. An diese Restglastafel 16, die aus dem Zwischenlager 20 in die Schneidvorrichtung 6 eingebracht wird, schließen sich normale Glasrohtafeln an, wobei ein eventuell wieder anfallender Rest ebenfalls in den Zwischenspeicher 20 genommen werden kann.

Eine erfindungsgemäße Vorrichtung, dargestellt in Fig. 4, weist hierfür zwischen der Schneidvorrichtung 6 und der Brechvorrichtung 7 die Zwischenspeichervorrichtung 20 auf.

Die Zwischenspeichervorrichtung 20 weist zumindest eine Lagereinrichtung 21 über der Schneidanlage 6 und eine Beschickungseinrichtung 22 zwischen der Schneidvorrichtung 6 und Brechvorrichtung 7 auf. Die Lagereinrichtung 21 verfügt über mit Rollen versehene horizontal übereinander angeordnete Schubfächer 29, die von ihrer Länge und Breite her derart ausgebildet sind. dass eine komplette Glasrohtafel 15 bzw. Restglastafel 16 einschiebbar ist. Die Achsen der vorzugsweise in nebeneinander angeordneten Reihen vorgesehenen Rollen in den Schubfächern 29 sind dahingehend ausgerichtet, dass sie senkrecht zur Einschubrichtung stehen, d. h. horizontal in Querrichtung zur Einschubrichtung. Die Oberseite der Schubfächer 29 bilden die Rollen, auf denen die Glasrohtafeln 15 oder Restglastafeln 16 horizontal verschiebbar aufliegen und auf den Rollen abrollen können. In den übereinander liegenden Schubfächern 29 sind die Rollenreihen zum Tragen der Glastafeln vorzugsweise seitlich versetzt angeordnet, so dass übereinander liegende Rollen sich nicht berühren; auf diese Weise ergibt sich eine geringe Bauhöhe der Schubfächer und damit der Lagereinrichtung 21 bei gleicher Zahl von Schubfächern 29. Die Höhe der Schubfächer 29 ist geringfügig größer als die Glastafelsorte mit der größten Dicke, welche in die Zwischenspeichervorrichtung einzulegen ist. Die Lagereinrichtung 21 kann deshalb sowohl für Glasrohtafeln 15 als auch für Restglastafeln 16 genützt werden. Die Anzahl der Einschubfächer 29 ist beliebig, sie richtet sich nach der Größe und Auslastung der Anlage und nach der Bauhöhe, die zur Verfügung steht. Die Beschickungseinrichtung 22 ist in Arbeitsrichtung der Schneidanlage der Lagereinrichtung nachgeordnet und weist einen Aufnahmetisch 23 für Restglastafeln 16 oder Glasrohtafeln 15 auf, welcher vertikal verfahrbar ist. Dieser Aufnahmetisch 23 ist vorzugsweise mit nicht angetriebenen Rollen 25 und mindestens einem Greifer 26 ausgestattet. Die Rollen sind in Längsrichtung der Schneidanlage 36 an der Oberseite von mehreren parallelen, auf Abstand zueinander angeordneten Kragarmen 23a befestigt. Die Kragarme sind senkrecht horizontal an einem Querträger 22a fixiert, der sich horizontal quer zur Arbeitsrichtung erstreckt und an vertikalen Tragsäulen geführt wird. Dieser Greifer 26 ist angetrieben und dazu bestimmt, die Restglastafein 16 oder Glasrohtafel 15 aus den Schubfächern 29 der Lagereinrichtung 21 auf den Tisch 23 herauszuziehen oder in die Schubfächer 29 hineinzuschieben, wobei dies im Allgemeinen bündig zur Be- und Entnahmeseite der Lagereinrichtung 21 erfolgt, um die Be- und Entnahme mit dem Greifer 26 zu erleichtern. Neben oder anstelle von Greifern 26 können auch angetriebene Rollen oder ein Förderband als Schiebeeinrichtung verwendet werden. Bei genügendem Abstand der Schubfächer 29 der Einrichtung 21 kann dies auch mit pneumatischen Saugern oder Ähnlichem geschehen. Nachdem eine Restglastafel 16 mit dem Greifer 26 auf den Aufnahmetisch 23 verfahren wurde, kann diese Restglastafel 16 auf eine Hubeinrichtung 27 unter die Lagereinrichtung 21 gefahren und dort aufgelegt werden, bis die letzte Glasrohtafel 15 der vorhergehenden Charge aus der Schneidvorrichtung 6 unter der Hubeinrichtung 27 hindurch zur Brechvorrichtung 7 verfahren wurde. Sobald die Schneidvorrichtung 6 frei ist, wird die entsprechende Restglastafel 16 auf das Niveau der Fördereinrichtungen zwischen Schneid- und Brecheinrichtung 6, 7 abgesenkt und in die Schneidvorrichtung 6 eingefahren. Anschließend kann die geschnittene Restglastafel 16 in die Brechvorrichtung 7 verfahren werden und wird dort entsprechend in Scheiben zerteilt. Sowohl die Hubeinrichtung 27 als auch der Aufnahmetisch 23 können unter das Niveau der Fördereinrichtung eintauchen. Die Fördereinrichtung besteht vorzugsweise aus einzelnen, auf seitliche Lücke angeordneten Förderbändern oder in Längsrichtung der Schneidanlage 36 angeordneten, parallelen und angetriebenen Förderrollenreihen. Zwischen den Förderbändern oder Reihen von Förderrollen bleiben damit quer zur Arbeitsrichtung Freiräume. Zusätzlich sind die Förderbänder oder Reihen von Förderrollen durch einen Freiraum 37 in Querrichtung der Schneidanlage 36 unterbrochen. Der Querträger 22a der Beschickungseinrichtung 22 kann durch den Freiraum 37 und die Kragarme des Aufnahmetisches 23 durch die Freiräume quer zur Arbeitsrichtung zwischen den Förderbändern oder Reihen von Förderrollen nach unten abtauchen. Damit ist das Abtauchen des Aufnahmetisches 23 unter das Niveau der Glastafel auf der Fördereinrichtung möglich. Die Hebeeinrichtung 27 ist analog aufgebaut, wobei vorzugsweise ein Querträger und somit ein Freiraum in Querrichtung der Schneidanlage 36 nicht erforderlich ist, weil nur eine geringe Hubdifferenz zwischen der obersten und untersten Stellung notwendig ist, was eine Tragsäule 38 entbehrt. Die Hubbewegung wird z.B. mit Pneumatikzylindereinrichtungen unterhalb des Niveaus der Fördereinrichtung bewirkt.

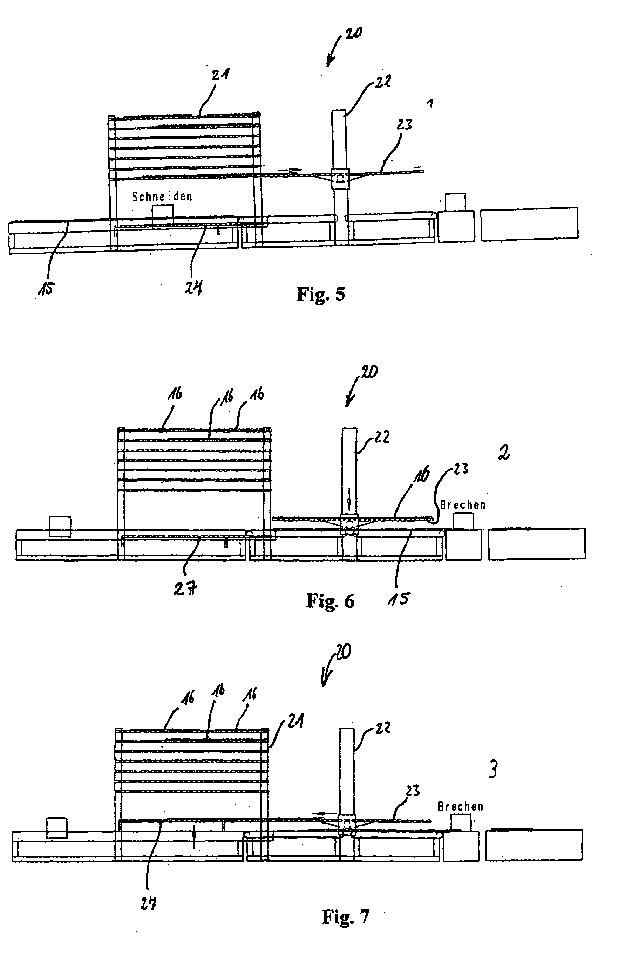

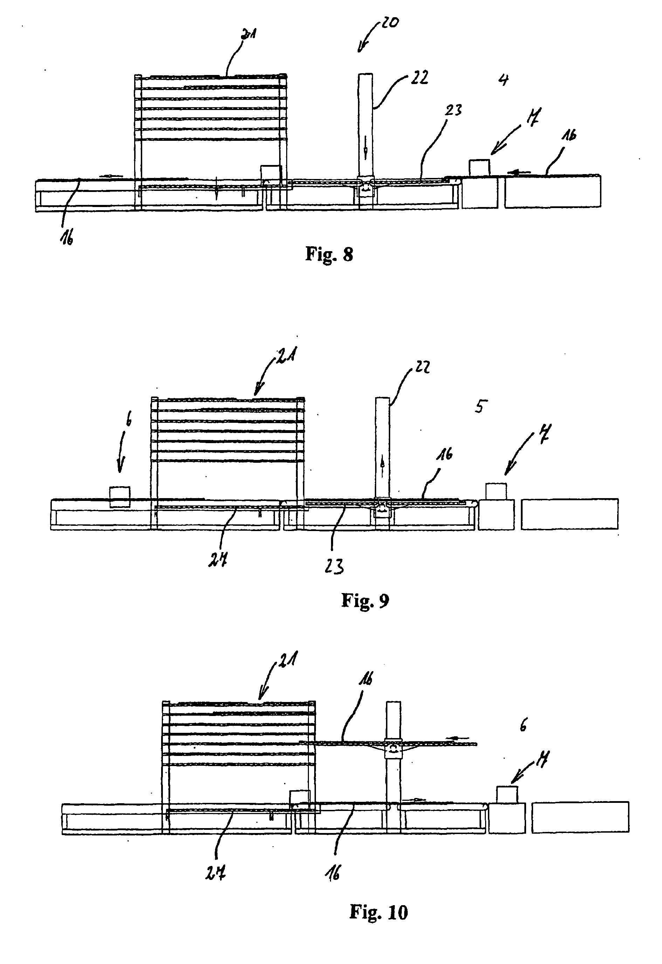

In den Figuren 5 bis 10 ist ein Verfahrensablauf einer erfindungsgemäßen Vorrichtung mit einem einfachen Aufnahmetisch in Seitenansicht schematisiert dargestellt, wobei in Fig. 5 mit dem Greifer 26 (nicht gezeigt) eine Restglastafel 16 aus einem Schubfach 29 der Lagereinrichtung 21 auf den Tisch 23 der Beschickungseinrichtung 22 gezogen wird. Der Tisch 23 mit der Restglastafel 16 wird anschließend (Fig. 6) bis oberhalb der Transportebene der Schneidvorrichtung 6 auf die entsprechend hochgefahrene Hubeinrichtung 27 aufgeschoben (Fig. 7). Anschließend wird die Hubeinrichtung 27 (Fig. 8) abgesenkt und dabei die Restglastafel 16 auf die Fördereinrichtung des Schneidtisches aufgelegt, wobei die Hubeinrichtung 27 unter das Niveau der Fördereinrichtung fährt. Nach dem Schneiden (Fig. 9) wird die Restglastafel 16 entsprechend der Arbeitsrichtung der Glastafeln aus der Schneidvorrichtung 6 zur Brechvorrichtung 7 verfahren. Gleichzeitig kann (Fig. 9) eine nächste Restglastafel 16 aus der Brechvorrichtung kommend von der Beschickungseinrichtung aufgenommen und einem Schubfach 29 zugeführt werden (Fig. 10).

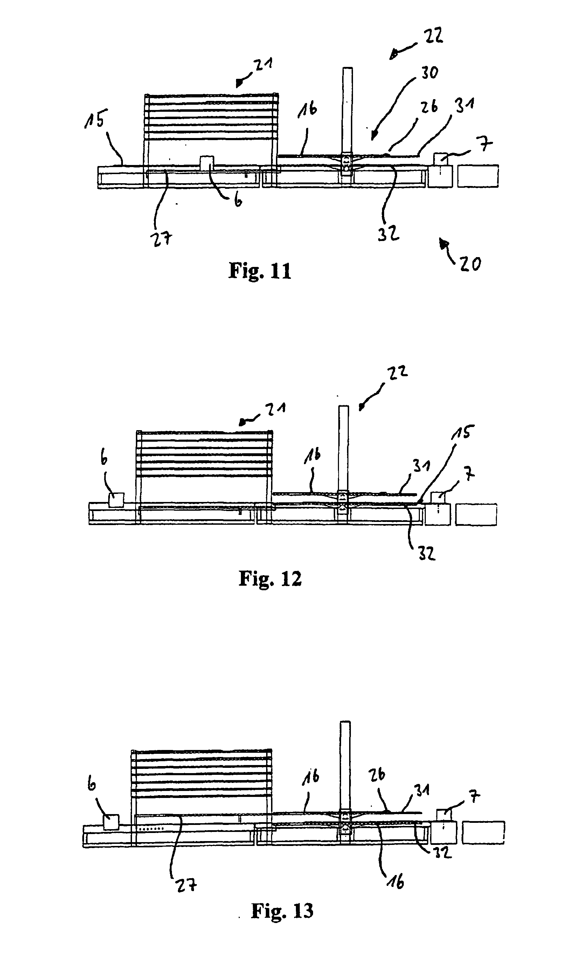

In Fig. 11 ist eine Zwischenspeichervorrichtung 20 bestehend aus einer Beschickungseinrichtung 22 mit einem Doppelauflagetisch 30 und einer Lagereinrichtung 21 in Grundstellung dargestellt. Der Doppelauflagetisch 30 verfügt über einen oberen Aufnahmetisch 31 und einen unteren Aufnahmetisch 32, welche horizontal und vertikal übereinander angeordnet sind. Die Aufnahmetische 31, 32 sind jeweils beispielsweise mit Greifern 26 und Rollen 25 gemäß Fig. 4 ausgestattet.

In der in Fig. 11 dargestellten Taktstellung befindet sich in der Schneidvorrichtung 6 für Floatglas eine Glasrohtafel 15 und auf dem oberen Aufnahmetisch 31 eine Restglastafel 16. Die Hubeinrichtung 27 ist im abgesenkten Zustand.

Nach dem Schneiden der Glasrohtafel 15 mit der Schneidvorrichtung 6, siehe Fig. 12, wird diese auf der Fördereinrichtung zur Brechvorrichtung 7 transportiert. Der untere Aufnahmetisch 32 ist dabei unter die Oberfläche der Fördereinrichtung eingetaucht, so dass die geschnittene Glasrohtafel 15 über dem unteren Aufnahmetisch 32 auf der Fördereinrichtung zur Brechvorrichtung 7 transportiert wird.

Gemäß Fig. 13 erfolgt der Abtransport der gebrochenen Stücke der Glasrohtafel 15 in Arbeitsrichtung von der Brechvorrichtung 7 weiter (z.B. von der X-Brechanlage zur Y-Brechanlage). Die Restglastafel 16 wird zurück vor die Brechvorrichtung 7 oberhalb des eingetauchten unteren Aufnahmetisches 32 befördert und die Hubeinrichtung 27 wird angehoben.

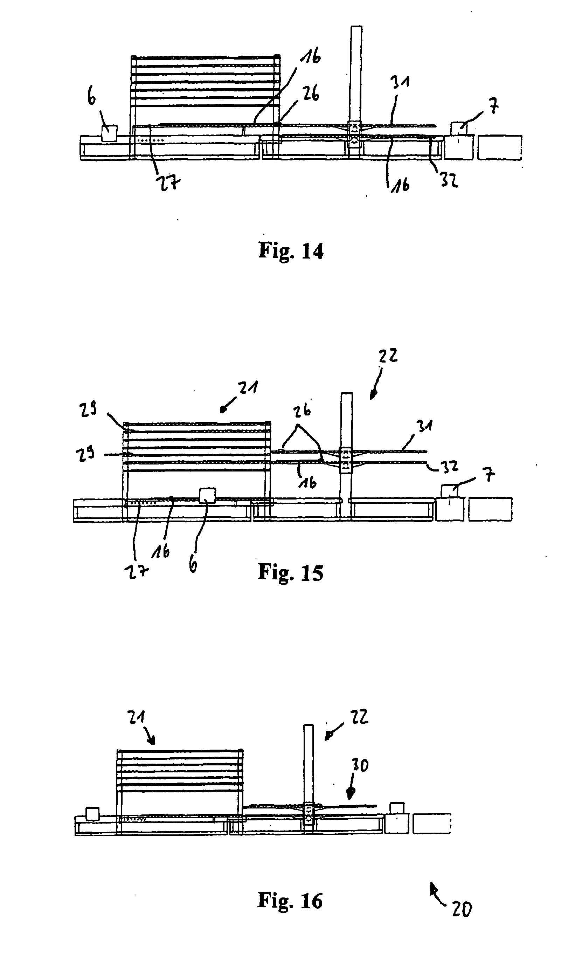

Gemäß Fig. 14 schiebt der Greifer 26 eine auf dem oberen Aufnahmetisch 31 befindliche Restglastafel 16 auf die Hubeinrichtung 27. Hierbei kann das Schieben der Restglastafel 16 auf die Hubeinrichtung 27 und der Transport der Restglastafel 16 im Bereich zwischen beiden Aufnahmetischen 31, 32 auf der Fördereinrichtung sowie das Brechen zeitgleich erfolgen.

Anschließend, siehe Fig. 15, wird die Hubeinrichtung 27 abgesenkt, damit die Restglastafel 16 auf der Schneidvorrichtung 6 aufliegt und geschnitten werden kann. Gleichzeitig können die Tische 31, 32 der Beschickungseinrichtung 22 nach oben gefahren werden. Die auf dem unteren Aufnahmetisch 32 befindliche Restglastafel 16 kann mittels des Greifers 26 in ein Schubfach 29 der Lagereinrichtung 21 eingeschoben werden. Darauf folgend wird die Beschickungsanlage 22 auf eine entsprechende Höhe verfahren und mittels des Greifers 26 auf den oberen Aufnahmetisch 31 aus einem weiteren Schubfach 29 eine dort eingelagerte Glasrohtafel 15 oder Restglastafel 16 gezogen.

Nach dem Absenken der Doppeltischanlage 30 der Beschickungseinrichtung 22 befinden sich Einrichtungen der Zwischenspeichervorrichtung 20 wieder in ihrer Ausgangsstellung gemäß Fig. 16. Ein erneuter Arbeitstakt nach Fig. 11 kann erfolgen.

Die Beschickungseinrichtung 22 mit einer Doppeltischanlage 30 erreicht eine kürzere Taktzeit, weil die Glasrohtafel 15 oder Restglastafel 16 nicht auf Eckübergabe transportiert werden muss. Vorzugsweise ist der Abstand der Aufnahmetische 31, 32 unveränderbar vorgesehen, so dass nur ein Antrieb erforderlich ist; es kann aber auch zweckmäßig sein, die Tische getrennt voneinander verfahrbar anzuordnen.

Dabei ist es auch möglich die beiden Aufnahmetische mit einzelnen Motoren anzutreiben, so dass diese unabhängig voneinander bewegt werden können. Damit kann die Taktzeit noch weiter verkürzt werden, weil - siehe Fig. 15 - das Einschieben der Restglastafel 16 bzw. Glasrohtafel 15 und das Herausziehen der Glasrohtafel 15 oder Restglastafel 16 aus einem darüber liegenden Schubfach 29 gleichzeitig erfolgen kann.

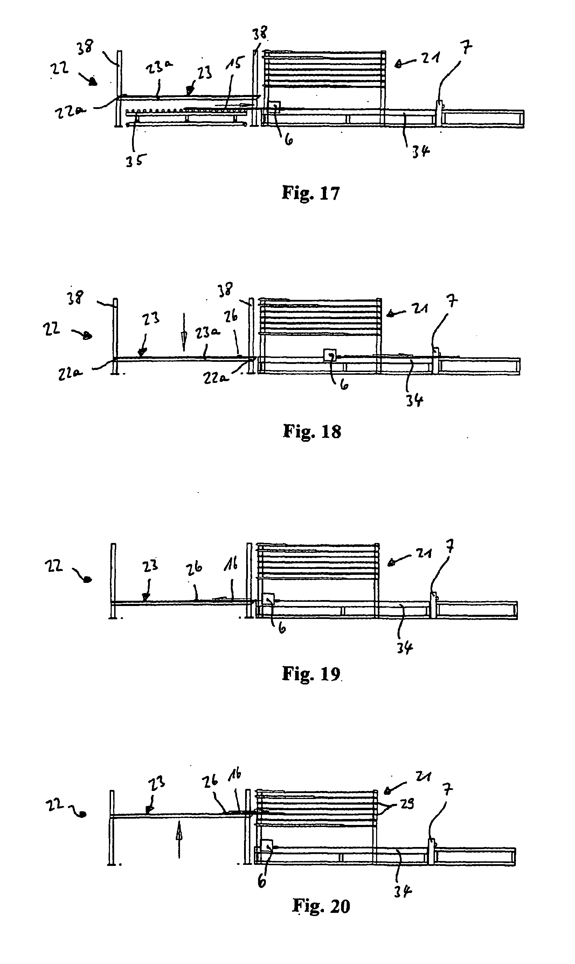

In Fig. 17 ist eine Schneidvorrichtung 6 und eine Brechvorrichtung 7 mit einer Fördereinrichtung 34 und einer Lagereinrichtung 21 dargestellt. Hierbei ist die Beschickungseinrichtung 22 nicht innerhalb der Schneidbrechanlage angeordnet, sondern vor der Schneidvorrichtung 6. Die Beschickungseinrichtung 22 besteht aus vier Tragsäulen 38, von denen in der Seitenansicht zwei Tragsäulen 38 sichtbar sind. Der Aufnahmetisch 23 wird von den parallel in einer Ebene am Querträger 22a befestigten Kragarmen 23a gebildet, wobei hier wegen der Seitenansicht nur ein Kragarm 23a sichtbar ist.

Die beiden Querträger 22a stehen in Fig. 17 senkrecht zur Zeichenebene. Damit ist nur die Befestigung der Querträger 22a an der Säule 38 sichtbar. Die beiden Querträger 22a sind an den Säulen 38 höhenverschieblich gelagert, so dass auch die Kragarme 23a und der von ihnen gebildete Aufnahmetisch 23 in der Höhe veränderbar ist. Die Beschickung mit Glasrohtafeln 15, erfolgt mit Hilfe des verfahrbaren Auflegekipptisches 35, welcher vertikal gelagerte Glasrohtafeln 15 aus einem Lager aufnimmt, um 90° in die horizontale Lage verschwenkt sowie vor das Förderband 34 zur Aufnahme transportiert (nicht dargestellt).,Der Auflegekipptisch 35 ist zum Verschieben auf dem Boden vorzugsweise entweder von einem Förderband angetrieben oder mit Rollen versehen. Anschließend wird die Glasrohtafel 15 mit dem Förderband 34 nach dem Schneiden zur Brechvorrichtung 7 transportiert, dargestellt in Fig. 18. Nach dem Brechen der Glasrohtafel 15 wird die Restglastafel 16 auf dem Förderband 34 zurücktransportiert, der verfahrbare Auflegekipptisch 35 aus dem Bereich unterhalb der Beschickungseinrichtung 22 entfernt und der Aufnahmetisch 23 auf der Höhe des Förderbandes 34 abgesenkt.

Fig. 19 zeigt den Transport der Restglastafel 16 auf den Aufnahmetisch 23 mit dem Greifer 26. In Fig. 20 wird die Restglastafel 16 nach dem Anheben des Aufnahmetisches 23 mit dem Greifer 26 in ein Schubfach 29 der Lagereinrichtung 21 eingeschoben. Der Transport einer Glasrohtafel 15 oder Restglastafel 16 aus der Lagereinrichtung 21 auf das Förderband 34 erfolgt in umgekehrter Reihenfolge wie in Fig. 19 und Fig. 20 dargestellt. Um auch eine Restglastafel 16 vom Auflegekipptisch 35 in die Lagereinrichtung 21 einbringen zu können, muss die Restglastafel 16 auf dem Förderband 34 zwischengelagert werden, der Aufnahmetisch 23 nach dem Herausfahren des Auflegekipptisches 35 heruntergefahren werden und anschließend die Restglastafel 16 auf den Aufnahmetisch 23 zum Einbringen in die Lagereinrichtung 21 bewegt werden.

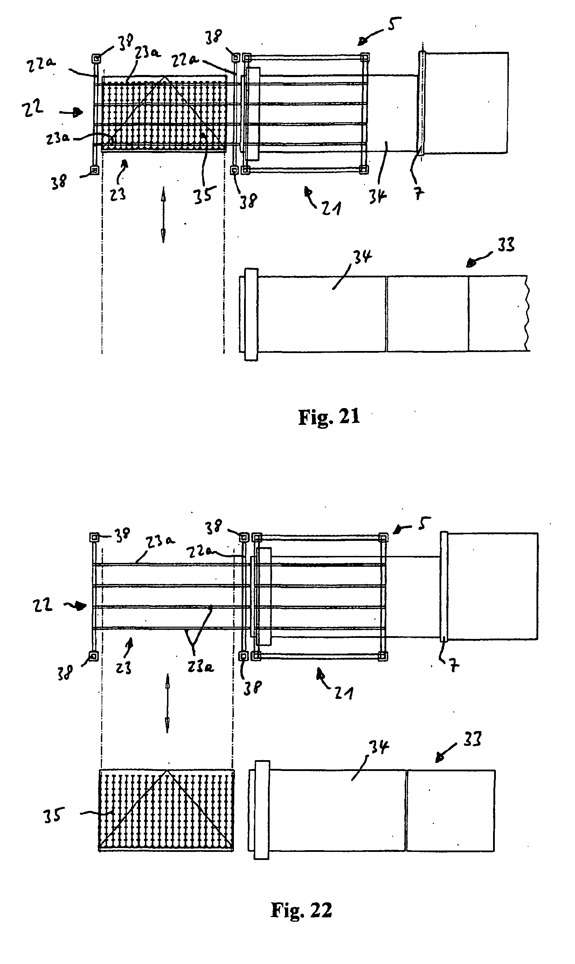

In Fig. 21 und Fig. 22' ist die Draufsicht auf eine Verbundglasschneidanlage 5 mit der Brechvorrichtung 7 und eine Floatglasschneidanlage 33 dargestellt, welche beide von einem verfahrbaren Auflegekipptisch 35 entsprechend Fig. 17 beschickt werden. Dabei ist die Beschickungseinrichtung 22 vor dem Förderband 34 der Verbundglasschneidanlage 5 angeordnet. Die Beschickungseinrichtung 22 verfügt über vier vertikale Tragsäulen 38, an denen zwei horizontale Querträger 22a von einem Motor angetrieben höhenverschieblich gelagert sind. An den beiden Querträgern 22a sind die Kragarme 23a fixiert, welche den Aufnahmetisch 23 bilden. Damit kann der Aufnahmetisch 23 mittels der höhenverschieblichen Lagerung der Querträger 22a an den Säulen 38 in der Höhe verstellt werden. Aufgrund der Transportmöglichkeit zwischen der Verbundglasschneidanlage 5 und der Floatglasschneidanlage 33 kann die Lagereinrichtung 21 auch als Zwischenspeicherfürdie Floatglasschneidanlage 33 verwendet werden. Verbundglasschneidanlagen 5 benötigen beispielsweise nur ungefähr 16 Glasrohtafeln 15 je Arbeitstag. Damit kann die Lagereinrichtung 21 als Pufferspeicher dienen und den Ladevorgang eines Hauptspeichers erleichtern, weil aus dem Hauptspeicher keine Entnahmen notwendig ist. Beispielsweise ist auch eine Wartung des Hauptspeichers während des Schneidprozesses ohne Ausfallzeiten in der Produktion möglich.

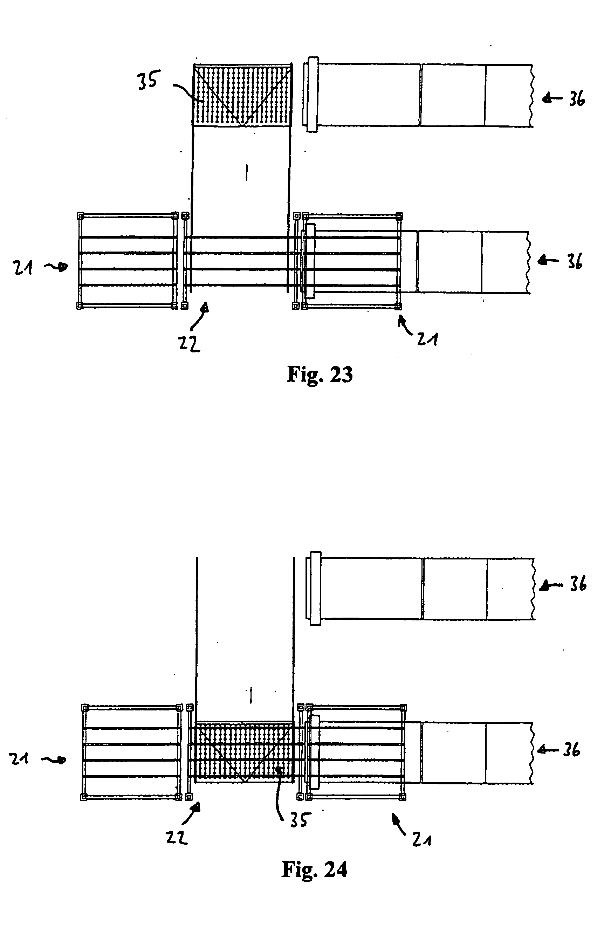

In Fig. 23 und Fig. 24 ist die Draufsicht auf zwei Schneidanlagen 36, z.B. eine Verbundglasschneidanlage 5 oder Floatglasschneidanlage 33, dargestellt, analog zu Fig. 21 und Fig. 22. Hierbei ist zusätzlich an der unteren Schneidanlage 36 gegenüber der Beschickungseinrichtung 22 eine zweite Lagereinrichtung 21 angeordnet, so dass damit die Zwischenspeicherkapazität verdoppelt wird. Der Vorteil der Anordnung der Beschickungseinrichtung 22 vor der Schneidanlage 36 besteht unter anderem darin, dass das Förderband 34 in der Schneidanlage 36 nicht unterbrochen sein muss, weil ein Eintauchen des Aufnahmetisches 23 mit einem Querträger in die Fördereinrichtung der Schneidanlage 36 nicht notwendig ist. Die Position einer oder mehrere Lagereinrichtungen 21 in einem Schneidanlagesystem mit einer oder mehreren Schneidanlagen 36 ist beliebig, weil ein Zwischentransport beispielsweise mit einem verfahrbaren Auflagekipptisch 35 oder einem Portalbeschicker 3 möglich ist.

Bei der Erfindung ist von Vorteil, dass die Glastafeln, insbesondere Restglastafeln, nicht wie bislang am Ende der Förderstrecke manuell oder maschinell ausgefahren werden müssen und in einem extra Lager abgelegt werden müssen, sondern die Glasplatten nach dem Schneiden in der Brecheinrichtung in die entsprechenden Glasscheiben zerteilt werden, wobei die angefallene Glastafel, insbesondere Restglastafel, zurückgefördert wird in Richtung Schneidanlage und hierbei auf den Bearbeitungstisch der Verfahreinrichtung gelangt. Die Verfahreinrichtung hebt die Glas - oder Restglastafel an und aus der Förderebene, beispielsweise zwischen Schneid- und Brecheinrichtung bei einer Floatglasschneidanlage, heraus, bis auf die Höhe eines freien Einschubfaches der Lagereinrichtung. Dort wird die Glasroh- oder Restglastafel zwischengespeichert, wobei der Rechner ihre Größe schon beim letzten Optimierungsverlauf gespeichert hat und automatisch in einem beliebigen Schneidoptimierungslauf einrechnet, so dass die Restglastafel, sofern sie nach ihrer Größe und Art geeignet ist, in den nächsten Optimierungslauf eingespeist wird. Hierbei ist von Vorteil, dass lange Rüstzeiten entfallen können, ferner müssen die Restglasscheiben nicht in Einzelanlagen zerlegt werden. Darüber hinaus werden der Verschnitt und damit die Entsorgungskosten minimiert. Da auch Glasrohtafeln zwischenspeicherbar sind kann beispielsweise auch das Haupttager ohne Produktionsunterbrechungen gewartet oder nachgefüllt werden.

## Patentansprüche

1. Verfahren zum Bearbeiten von Glastafeln, wobei Schnittmuster flächenoptimiert auf Glasrohtafelflächen rechnerisch verteilt werden und anschließend eine entsprechende Menge Glasrohtafeln (15) einer Schneidvorrichtung (36) zugeführt und entsprechend dem berechneten Muster geschnitten und anschließend gebrochen werden, wobei Restglastafeln (16) übrig bleiben,
**dadurch gekennzeichnet, dass**
- die Restglastafeln (16) in einen Zwischenspeicher (20) gebracht und dort horizontal gelagert werden, ihre Größe, Anzahl und ihr Lagerort rechnergestützt gespeichert werden, und die im Zwischenspeicher (20) gelagerten Restglastafeln (16) bei einer folgenden Schnittmusterberechnung eingerechnet, ausgewählt und der Schneidvorrichtung (36) zugeführt werden,
- die Restglastafeln (16) aus einem Schneidlinienniveau vertikal angehoben und horizontal in eine Lagereinrichtung (21) eingeschoben werden und für ihre Verwendung in umgekehrter Reihenfolge auf das Schneidlinienniveau gebracht werden,
- die Lagerung der Restglastafeln (16) im Zwischenspeicher (20) oberhalb der Schneidlinie erfolgt,
- die Restglastafeln (16) horizontal übereinander angeordnet gelagert werden.

2. Verfahren nach Anspruch 1,
**dadurch gekennzeichnet, dass**
die Restglastafeln (16) als erste Tafel einer zu schneidenden schnittmusterbezogenen Glastafelsorte (15, 16) der Schneidvorrichtung (36) zugeführt werden.

3. Verfahren nach einem oder mehreren der Ansprüche 1 und/oder 2,
**dadurch gekennzeichnet, dass**
auch Glasrohtafeln (15) in den Zwischenspeicher (20) gebracht und dort horizontal gelagert werden, ihre Größe, Anzahl und ihr Lagerort rechnergestützt gespeichert werden und die im Zwischenspeicher (20) gelagerten Glasrohtafeln (15) bei einer folgenden Schnittmusterberechnung eingerechnet, ausgewählt und der Schneidvorrichtung (36) zugeführt werden.

4. Verfahren nach einem der Ansprüche 1 bis 3,
**dadurch gekennzeichnet, dass**
die Restglastafeln (16) oder Glasrohtafeln (15) zu einem beliebigen Zeitpunkt der Schneidvorrichtung (36) zugeführt werden.

5. Verfahren nach einem oder mehreren der Ansprüche 1 bis 4,
**dadurch gekennzeichnet, dass**
für die Restglastafeln (16) ein flächenoptimiertes Schnittmuster erstellt wird und die Restglastafeln (16) entsprechend aufgeteilt werden.

6. Verfahren nach Anspruch 5,
**dadurch gekennzeichnet, dass**
das Schnittmuster der Restglastafel (16) mit dem Schnittmuster für die Glasrohtafel (15) kombiniert wird.

7. Verfahren nach einem der Ansprüche 1 bis 6,
**dadurch gekennzeichnet, dass**
die Restglastafeln (16) mit einem Transportmittel der Schneidlinie bis zu einer Beschickungseinrichtung (22) zurückgefahren werden.

8. Verfahren nach einem oder mehreren der vorhergehenden Ansprüche,
**dadurch gekennzeichnet, dass**
die Restglastafeln (16) in die dem Schnittmuster entsprechende Rohglastafellinie eingereiht werden.

9. Verfahren nach einem oder mehreren der vorhergehenden Ansprüche,
**dadurch gekennzeichnet, dass**
die Rohglastafeln (15) in die dem Schnittmuster entsprechende Rohglastafellinie eingereiht werden.

10. Verfahren zum Bearbeiten von Glastafeln, wobei Schnittmuster flächenoptimiert auf Glasrohtafelflächen rechnerisch verteilt werden und anschließend eine entsprechende Menge Glasrohtafeln (15) einer Schneidvorrichtung (36) zugeführt und entsprechend dem berechneten Muster geschnitten und anschließend gebrochen werden, wobei Restglastafeln (16) übrig bleiben können,
**dadurch gekennzeichnet, dass**
die Glasrohtafeln (15) in einen Zwischenspeicher (20) gebracht und dort horizontal gelagert werden, ihre Größe, Anzahl und ihr Lagerort rechnergestützt gespeichert werden und die im Zwischenspeicher (20) gelagerten Glasrohtafeln (15) bei einer folgenden Schnittmusterberechnung eingerechnet, ausgewählt und der Schneidvorrichtung (36) zugeführt werden.

11. Verfahren nach Anspruch 10,
**dadurch gekennzeichnet, dass**
die Glasrohtafeln (15) in die dem Schnittmuster entsprechende Rohglastafellinie eingereiht werden.

12. Vorrichtung zum Bearbeiten von Glastafeln, insbesondere zum Durchführen des Verfahrens nach einem der Ansprüche 1 bis 11, wobei vorzugsweise wenigstens eine Lagereinrichtung (1, 2, 4) für unbearbeitete Glasrohtafeln (15), wenigstens eine Verfahreinrichtung (3) zum Entnehmen der Glasrohtafeln (15) aus den Lagereinrichtungen (1, 2, 4), wenigstens eine Schneidvorrichtung (36), z. B. eine Verbundglasschneidanlage (5) oder Floatglasschneidanlage (33), zum Schneiden der mit der Verfahreinrichtung (3) verfahrenen Glasrohtafeln und vorzugsweise wenigstens eine Brechvorrichtung (7) zum Aufteilen der Glasrohtafeln (15) in Glasscheiben sowie ggf. wenigstens eine Sortiereinrichtung
zum Bevorraten und Sortieren der geschnittenen Glastafeln vorhanden sind,
**dadurch gekennzeichnet, dass**
- eine Zwischenspeichervorrichtung (20) vorhanden ist, in welche Restglastafeln (16) und/oder Glasrohtafeln (15) horizontal einlagerbar sind,
- die Zwischenspeichervorrichtung (20) oberhalb der Schneidlinie angeordnet ist,
- die Zwischenspeichervorrichtung (20) zumindest eine Lagereinrichtung (21) aufweist, in der Restglastafeln (16) und/oder Glasrohtafeln (15) horizontal übereinander angeordnet einlagerbar sind,
- die Lagereinrichtung (21) Einschubfächer (29) aufweist, in denen die Rohglastafeln (15) oder Restglastafeln (16) aufliegen,
- die Zwischenspeichervorrichtung (20) eine Beschickungseinrichtung (22) aufweist, welche die Restglastafeln (16) der Brechanlage (7) entnimmt und in die Lagereinrichtung (21) verfährt, oder der Schneidvorrichtung (36) entnimmt und in die Lagereinrichtung (21), vorzugsweise bündig an der Beschickungs- und Entnahmeseite, verfährt.

13. Vorrichtung nach Anspruch 12,
**dadurch gekennzeichnet, dass**
die Höhe der Schubfächer (29) geringfügig größer ist als die Glastafelsorte mit der größten Dicke, welche in der Lagereinrichtung (21) einzuschieben ist.

14. Vorrichtung nach Anspruch 12 und/oder 13,
**dadurch gekennzeichnet, dass**
die Rohglastafeln (15) oder Restglastafeln (16) auf der Oberseite der Einschubfächer (29) auf Rollen (25) aufliegen, deren Achsen horizontal in Querrichtung der Lagereinrichtung (21) liegen.

15. Vorrichtung nach Anspruch 14,
**dadurch gekennzeichnet, dass**
die übereinander liegenden Rollen (25) in übereinander angeordneten Einschubfächern (29) der Lagereinrichtung (21) vorzugsweise versetzt angeordnet sind.

16. Vorrichtung nach einem der Ansprüche 12 bis 15,
**dadurch gekennzeichnet, dass**
die Beschickungseinrichtung (22) einen Auflagetisch (23), auf der die Restglastafeln (16) und/oder Glasrohtafeln (15) aufliegen, aufweist.

17. Vorrichtung nach Anspruch 16,
**dadurch gekennzeichnet, dass**
die Restglastafeln (16) und/oder die Glasrohtafeln (15) auf der Auflageeinrichtung (23) auf Rollen (25) lagern.

18. Vorrichtung nach einem der Ansprüche 12 bis 17,
**dadurch gekennzeichnet, dass**
die Beschickungseinrichtung (22) zwischen zwei Lagereinrichtungen (21) angeordnet ist, wobei die eine Lagereinrichtung (21) über der Schneidvorrichtung (36) und die andere Lagereinrichtung (21) oberhalb der Brechvorrichtung (7) angeordnet ist.

19. Vorrichtung nach einem der Ansprüche 12 bis 18,
**dadurch gekennzeichnet, dass**
unterhalb der Lagereinrichtung (21) eine Hubeinrichtung (27) vorhanden ist, auf der Restglastafeln (16) von der Beschickungseinrichtung (22) kommend aufgelagert und in die Schneidvorrichtung (36) einfahrbar sind.

20. Vorrichtung nach einem oder mehreren der Ansprüche 12 bis 19,
**dadurch gekennzeichnet, dass**
die Beschickungseinrichtung (22) einen oberen Aufnahmetisch (31) und einen unteren Aufnahmetisch (32) aufweist.

21. Vorrichtung nach einem oder mehreren der Ansprüche 12 bis 20,
**dadurch gekennzeichnet, dass**
die Beschickungseinrichtung (22) wenigstens drei Aufnahmetische (23) aufweist.

22. Vorrichtung nach einem der Ansprüche 16 bis 21,
**dadurch gekennzeichnet, dass**
die Aufnahmetische (23, 31, 32) einzeln oder gemeinsam angetrieben sind.

23. Vorrichtung nach einem der Ansprüche 16 bis 22,
**dadurch gekennzeichnet, dass**
an den Aufnahmetischen (23, 31, 32) nicht angetriebene Rollen und ein Greifer (26), angetriebene Rollen oder wenigstens ein Förderband an Kragarmen (23a) zum Transport der Glasrohtafeln (15) und/oder Restglastafeln (16) angeordnet sind, wobei die Kragarme (23a) an einem Querträger (22a) senkrecht fixiert sind.

24. Vorrichtung nach einem der Ansprüche 16 bis 23,
**dadurch gekennzeichnet, dass**
wenigstens ein Aufnahmetisch (23, 31, 32) unterhalb das Niveau der Oberseite der Fördereinrichtung bzw. des Auflagetisches der Schneidvorrichtung (36) eintaucht.

25. Vorrichtung nach Anspruch 24,
**dadurch gekennzeichnet, dass**
die Fördereinrichtung der Schneidanlage (36) aus Förderbändern oder in Längsrichtung der Schneidanlage (36) nacheinander angeordneten angetriebenen Förderrollen besteht, welche in Längsrichtung Freiräume und in Querrichtung vorzugsweise einen Freiraum (37) aufweisen.

26. Vorrichtung nach Anspruch 25,
**dadurch gekennzeichnet, dass**
zwischen den Freiräumen in Längsrichtung der Fördereinrichtung die Kragarme (23a) der Aufnahmetische (23, 31, 32) und in vorzugsweise einen Freiraum (37) in Querrichtung der Querträger (22a) der Aufnahmetische (23, 31, 32) bewegbar ist.

27. Vorrichtung nach einem der Ansprüche 12 bis 26,
**dadurch gekennzeichnet, dass**
wenigstens zwei Schneidvorrichtungen (36) mit einer Verfahreinrichtung (3), vorzugsweise als Portalbeschicker (3) oder verfahrbarer Auflegekipptisch (35) miteinander zum Austausch von Glasrohtafeln (15) oder Restglastafeln (16) gekoppelt sind, so dass insbesondere die Zwischenspeichervorrichtungen (20) für jede der gekoppelten Schneidvorrichtungen (6) zur Verfügung steht.

28. Vorrichtung nach einem der Ansprüche 12 bis 27,
**dadurch gekennzeichnet, dass**
die Beschickungseinrichtung (22) zwischen zwei Lagereinrichtungen (21) angeordnet ist, wobei die eine Lagereinrichtung (21) über der Schneidvorrichtung (36) und die andere Lagereinrichtung (21) oberhalb der Brechvorrichtung (7) angeordnet ist.

29. Vorrichtung nach einem der Ansprüche 12 bis 28,
**dadurch gekennzeichnet, dass**
die Lagereinrichtung (21) an einem beliebigen Ort, jedoch vorzugsweise oberhalb der Schneidvorrichtung (36) positioniert ist.

30. Vorrichtung nach einem der Ansprüche 12 bis 29,
**dadurch gekennzeichnet, dass**
die Beschickungseinrichtung (22) vor der Schneidvorrichtung (36) angeordnet ist.

31. Vorrichtung nach einem der Ansprüche 12 bis 30,
**dadurch gekennzeichnet, dass**
wenigstens eine Hubeinrichtung (27) vorhanden ist, auf der Restglastafeln (16) oder Glasrohtafeln (15) von der Beschickungseinrichtung (22) kommend aufgelagert und in die Schneidvorrichtung (36) einfahrbar sind.

32. Vorrichtung nach Anspruch 31,
**dadurch gekennzeichnet, dass**
die Hubeinrichtung (27) unterhalb das Niveau der Oberseite der Fördereinrichtung der Schneidvorrichtung (36) eintaucht.

33. Vorrichtung nach Anspruch 31 und/oder 32,
**dadurch gekennzeichnet, dass**
der Auflagebereich der Hubeinrichtung (27) aus einzelnen Längsträgern besteht, welche in den Freiräumen der Fördereinrichtung in Längsrichtung der Schneidvorrichtung (36) bewegbar sind.

## Claims

1. A method for working glass panels, wherein cutting patterns are computationally distributed in a surface-optimised manner over glass blank panel surfaces, and a corresponding quantity of glass blank panels (15) are subsequently conveyed to a cutting device (36), cut in accordance with the computed pattern and then broken, during which operation residual glass panels (16) are left over,
**characterised in that**
- the residual glass panels (16) are brought to an intermediate store (20) and stored there horizontally, their size, number and storage location are stored with the aid of a computer, and the residual glass panels (16) stored in the intermediate store (20) are included in a subsequent cutting-pattern computation, selected, and conveyed to the cutting device (36),
- the residual glass panels (16) are raised vertically from a cutting-line level and pushed horizontally into a storage device (21), and for use are brought to the cutting-line level in reverse sequence,
- the residual glass panels (16) are stored in the intermediate store (20) above the cutting line,
- the residual glass panels (16) are stored horizontally arranged one on top of the other.

2. A method according to Claim 1,
**characterised in that** the residual glass panels (16) are conveyed to the cutting device (36) as the first panel of a cutting pattern-related glass panel type (15, 16) to be cut.

3. A method according to one or more of Claims 1 and/or 2,
**characterised in that** glass blank panels (15) are also brought to the intermediate store (20) and stored there horizontally, their size, number and storage location are stored with the aid of a computer, and the glass blank panels (15) stored in the intermediate store (20) are included in a subsequent cutting-pattern computation, selected, and conveyed to the cutting device (36).

4. A method according to any one of Claims 1 to 3,
**characterised in that** the residual glass panels (16) or glass blank panels (15) are conveyed to the cutting device (36) at any time.

5. A method according to one or more of Claims 1 to 4,
**characterised in that** a surface-optimised cutting pattern is prepared for the residual glass panels (16), and the residual glass panels (16) are divided up accordingly.

6. A method according to Claim 5,
**characterised in that** the cutting pattern of the residual glass panel (16) is combined with the cutting pattern for the glass blank panel (15).

7. A method according to any one of Claims 1 to 6,
**characterised in that** the residual glass panels (16) are driven back to a charging mechanism (22) with a transport means of the cutting line.

8. A method according to one or more of the preceding claims,
**characterised in that** the residual glass panels (16) are ordered into the glass blank panel line according to the cutting pattern.

9. A method according to one or more of the preceding claims,
**characterised in that** the glass blank panels (15) are ordered into the glass blank panel line according to the cutting pattern.

10. A method for working glass panels, wherein cutting patterns are computationally distributed in a surface-optimised way manner over glass blank panel surfaces, and a corresponding quantity of glass blank panels (15) are subsequently conveyed to a cutting device (36), cut in accordance with the computed template and then broken, during which operation residual glass panels (16) may be left over,
**characterised in that** the glass blank panels (15) are brought to an intermediate store (20) and stored there horizontally, their size, number and storage location are stored with the aid of a computer, and the glass blank panels (15) stored in the intermediate store (20) are included in a subsequent cutting-pattern computation, selected, and conveyed to the cutting device (36).

11. A method according to Claim 10,
**characterised in that** the glass blank panels (15) are ordered into the glass blank panel line according to the cutting pattern.

12. A device for working glass panels, in particular for performing the method according to any one of Claims 1 to 11, wherein preferably at least one storage device (1, 2, 4) for unworked glass blank panels (15), at least one transportation mechanism (3) for removing the glass blank panels (15) from the storage devices (1, 2, 4), at least one cutting device (36), e.g. a laminated-glass cutting plant (5) or float-glass cutting plant (33), for cutting the glass blank panels transported by the transportation mechanism (3), and preferably at least one breaking device (7) for dividing the glass blank panels (15) into glass panes, and optionally at least one sorting mechanism for storing and sorting the cut glass panels are present,
**characterised in that**
- an intermediate storage device (20) is present, into which residual glass panels (16) and/or glass blank panels (15) are horizontally insertable,
- the intermediate storage device (20) is arranged above the cutting line,
- the intermediate storage device (20) has at least one storage device (21) in which residual glass panels (16) and/or glass blank panels (15) are insertable horizontally arranged one on top of the other,
- the storage device (21) has drawers (29) in which the glass blank panels (15) or residual glass panels (16) are supported,
- the intermediate storage device (20) has a charging mechanism (22) which removes the residual glass panels (16) from the breaking plant (7) and transports them into the storage device (21), or removes them from the cutting device (36) and transports them into the storage device (21), preferably flush with the receiving and removing side.

13. A device according to Claim 12,
**characterised in that** the height of the drawers (29) is slightly greater than the thickest glass-panel type to be inserted into the storage device (21).

14. A device according to Claim 12 and/or 13,
**characterised in that** the glass blank panels (15) or residual glass panels (16) on the upper surface of the drawers (29) are supported on rollers (25) the axes of which lie horizontally crosswise to the storage device (21).

15. A device according to Claim 14,
**characterised in that** the rollers (25) positioned on top of one another are arranged, preferably with offset, in drawers (29) of the storage device (21) which are arranged on top of one another.

16. A device according to any one of Claims 12 to 15,
**characterised in that** the charging mechanism (22) has a supporting table (23) on which the residual glass panels (16) and/or the glass blank panels (15) are supported.

17. A device according to Claim 16,
**characterised in that** the residual glass panels (16) and/or the glass blank panels (15) are stored on rollers (25) on the support mechanism (23).

18. A device according to any one of Claims 12 to 17,
**characterised in that** the charging mechanism (22) is arranged between two storage devices (21), the one storage device (21) being arranged above the cutting device (36) and the other storage device (21) above the breaking device (7).

19. A device according to any one of Claims 12 to 18,
**characterised in that** a lifting mechanism (27) is present beneath the storage device (21), on which lifting mechanism (27) residual glass panels (16) coming from the charging mechanism (22) are supported and are transportable into the cutting device (36).

20. A device according to one or more of Claims 12 to 19,
**characterised in that** the charging mechanism (22) has an upper receiving table (31) and a lower receiving table (32).

21. A device according to one or more of Claims 12 to 20,
**characterised in that** the charging mechanism (22) has at least three receiving tables (23).

22. A device according to any one of Claims 16 to 21,
**characterised in that** the receiving tables (23, 31, 32) are driven individually or jointly.

23. A device according to any one of Claims 16 to 22,
**characterised in that** non-driven rollers and a grab (26), driven rollers or at least one conveyor belt on cantilevers (23a) are arranged on the receiving tables (23, 31, 32) for the purpose of transporting the glass blank panels (15) and/or residual glass panels (16), the cantilevers (23a) being attached perpendicularly to a gantry (22a).

24. A device according to any one of Claims 16 to 23,
**characterised in that** at least one receiving table (23, 31, 32) dips beneath the level of the upper surface of the conveying mechanism or of the supporting table of the cutting device (36).

25. A device according to Claim 24,
**characterised in that** the conveyance mechanism of the cutting plant (36) consists of conveyor belts or driven conveyor rollers arranged one after the other in the longitudinal direction of the cutting plant (36), which conveyor rollers exhibit clearance zones in the longitudinal direction and preferably one clearance zone (37) in the transverse direction.

26. A device according to Claim 25,
**characterised in that** the cantilevers (23a) of the receiving tables (23, 31, 32) is [sic] movable between the clearance zones in the longitudinal direction of the conveyance mechanism and into preferably one clearance zone (37) in the transverse direction of the gantries (22a) of the receiving tables (23, 31, 32).

27. A device according to any one of Claims 12 to 26,
**characterised in that** at least two cutting devices (36) with one transportation mechanism (3) are coupled together preferably as portal charging mechanisms (3) or transportable tilting feed table (35) for the purpose of exchanging glass blank panels (15) or residual glass panels (16), with the result that in particular the intermediate storage devices (20) is [sic] available for each of the coupled cutting devices (6).

28. A device according to any one of Claims 12 to 27,
**characterised in that** the charging mechanism (22) is arranged between two storage devices (21), the one storage device (21) being arranged above the cutting device (36) and the other storage device (21) above the breaking device (7).

29. A device according to any one of Claims 12 to 28,
**characterised in that** the storage device (21) is positioned in any location, but preferably above the cutting device (36).

30. A device according to any one of Claims 12 to 29,
**characterised in that** the charging mechanism (22) is arranged upstream of the cutting device (36).

31. A device according to any one of Claims 12 to 30,
**characterised in that** at least one lifting mechanism (27) is present, on which residual glass panels (16) or glass blank panels (15) coming from the charging mechanism (22) are stored and are introducible into the cutting device (36).

32. A device according to Claim 31,
**characterised in that** the lifting mechanism (27) dips below the level of the upper surface of the conveyance mechanism of the cutting device (36).

33. A device according to Claim 31 and/or 32,
**characterised in that** the supporting region of the lifting mechanism (27) consists of individual longitudinal beams which are movable in the clearance zones of the conveyance mechanism in the longitudinal direction of the cutting device (36).

## Revendications

1. Procédé de façonnage de panneaux de verre, dans lequel des modèles de coupe calculés sont répartis de manière optimisée en terme de surface sur des surfaces pour panneaux de verre bruts, puis une quantité correspondante de panneaux de verre bruts (15) est acheminée vers un dispositif de coupe (36) et lesdits panneaux sont coupés conformément au modèle calculé et sont scindés ensuite, moyennant quoi, il en subsiste des panneaux de verre résiduels (16),
**caractérisé en ce que**
- les panneaux de verre résiduels (16) sont acheminés vers un une unité de stockage temporaire (20) et y sont stockés horizontalement, leur taille, leur nombre et leur lieu de stockage sont mémorisés de manière assistée par ordinateur, et les panneaux de verre résiduels (16), entreposés dans le une unité de stockage temporaire (20), sont pris en compte dans un calcul de modèle de coupe suivant, sont sélectionnés et sont acheminés vers le dispositif de coupe (36),
- les panneaux de verre résiduels (16) sont soulevés verticalement en partant du niveau de la ligne de coupe et sont introduit horizontalement dans un dispositif de stockage (21) et, en vue de leur utilisation, sont amenés en ordre inverse au niveau de la ligne de coupe,
- les panneaux de verre résiduels (16) sont entreposés dans le une unité de stockage temporaire (20) au-dessus de la ligne de coupe,
- les panneaux de verre résiduels (16) sont stockés en étant disposés horizontalement les uns sur les autres.

2. Procédé selon la revendication 1, **caractérisé en ce que** les panneaux de verre résiduels (16), en tant que premiers panneaux d'un type de panneaux de verre (15, 16) à couper en fonction d'un modèle de coupe, sont acheminés vers le dispositif de coupe (36).

3. Procédé selon une ou plusieurs des revendications 1 et/ou 2, **caractérisé en ce que** des panneaux de verre bruts (15) sont également amenés dans le une unité de stockage temporaire (20) et y sont stockés horizontalement, leur taille, leur nombre et leur lieu de stockage sont mémorisés de manière assistée par ordinateur, et les panneaux de verre bruts (15), entreposés dans le une unité de stockage temporaire (20), sont pris en compte dans un calcul de modèle de coupe suivant, sont sélectionnés et sont acheminés vers le dispositif de coupe (36).

4. Procédé selon l'une quelconque des revendications 1 à 3, **caractérisé en ce que** les panneaux de verre résiduels (16) ou les panneaux de verre bruts (15) sont acheminés vers le dispositif de coupe (36) à un instant quelconque.

5. Procédé selon une ou plusieurs des revendications 1 à 4, **caractérisé en ce qu'**un modèle de coupe optimisé en terme de surface est établi pour les panneaux de verre résiduels (16), et lesdits panneaux de verre résiduels (16) sont subdivisés conformément à celui-ci.

6. Procédé selon la revendication 5, **caractérisé en ce que** le modèle de coupe des panneaux de verre résiduels (16) est combiné avec le modèle de coupe des panneaux de verre bruts (15).

7. Procédé selon l'une quelconque des revendications 1 à 6, **caractérisé en ce que** les panneaux de verre résiduels (16) sont retournés jusqu'à un dispositif de chargement (22) au moyen d'un organe de transport de la ligne de coupe.

8. Procédé selon une ou plusieurs des revendications précédentes, **caractérisé en ce que** les panneaux de verre résiduels (16) sont rangés dans la ligne de panneaux de verre bruts correspondant au modèle de coupe.

9. Procédé selon une ou plusieurs des revendications précédentes, **caractérisé en ce que** les panneaux de verre bruts (15) sont rangés dans la ligne de panneaux de verre bruts correspondant au modèle de coupe.

10. Procédé de façonnage de panneaux de verre, selon lequel des modèles de coupe calculés sont répartis de manière optimisée en terme de surface sur les surfaces de panneaux de verre bruts, puis une quantité correspondante de panneaux de verre bruts (15) est acheminée vers un dispositif de coupe (36) et lesdits panneaux sont découpés conformément au modèle calculé et sont scindés ensuite, moyennant quoi, il peut en subsister des panneaux de verre résiduels (16),
**caractérisé en ce que** les panneaux de verre bruts (15) sont acheminés vers un une unité de stockage temporaire (20) et y sont stockés horizontalement, leur taille, leur nombre et leur lieu de stockage sont mémorisés de manière assistée par ordinateur, et les panneaux de verre bruts (15), stockés dans le une unité de stockage temporaire (20), sont pris en compte dans un calcul de modèle de coupe suivant, sont sélectionnés et sont acheminés vers le dispositif de coupe (36).

11. Procédé selon la revendication 10, **caractérisé en ce que** les panneaux de verre bruts (15) sont rangés dans la ligne de panneaux de verre bruts correspondant au modèle de coupe.

12. Dispositif de façonnage de panneaux de verre, en particulier pour la mise en oeuvre du procédé selon l'une quelconque des revendications 1 à 11, ledit dispositif comportant de préférence au moins un dispositif de support (1, 2, 4) pour les panneaux de verre bruts (15) non traités, au moins un dispositif de transfert (3) destiné à extraire les panneaux de verre bruts (15) hors des dispositifs de stockage (1, 2, 4), au moins un dispositif de coupe (36), tel qu'une installation de coupe de verre composite (5) ou une installation de coupe de verre flotté (33), destiné à couper les panneaux de verre bruts déplacés avec le dispositif de transfert (3), et de préférence au moins un dispositif de séparation (7) pour diviser les panneaux de verre bruts (15) en vitres, ainsi que, le cas échéant, au moins un dispositif de tri destiné à stocker et trier les panneaux de verre coupés,
**caractérisé en ce que**
- un une unité de stockage temporaire (20) est prévu pour pouvoir y stocker horizontalement des panneaux de verre résiduels (16) et/ou des panneaux de verre bruts (15),
- le une unité de stockage temporaire (20) est disposé au-dessus de la ligne de coupe,
- le une unité de stockage temporaire (20) comporte au moins un dispositif de stockage (21), dans lequel les panneaux de verre résiduels (16) et/ou les panneaux de verre bruts (15) peuvent être introduits en étant disposés horizontalement les uns au-dessus des autres,
- le dispositif de stockage (21) comporte des tiroirs (29), dans lesquels sont posés les panneaux de verre bruts (15) ou les panneaux de verre résiduels (16),
- le une unité de stockage temporaire (20) comporte un dispositif de chargement (22), lequel sort les panneaux de verre résiduels (16) du dispositif de séparation (7) et les transporte dans le dispositif de stockage (21), ou les prélève dans le dispositif de coupe (36) et les transporte dans le dispositif de stockage (21), de préférence en alignement avec le côté de chargement et le côté de prélèvement.

13. Dispositif selon la revendication 12, **caractérisé en ce que** la hauteur des tiroirs (29) est légèrement supérieure à l'épaisseur du type de panneau de verre avec la plus grande épaisseur, qui sera introduit dans le dispositif de stockage (21).

14. Dispositif selon la revendication 12 et/ou 13, **caractérisé en ce que** les panneaux de verre bruts (15) ou les panneaux de verre résiduels (16) sont posés sur la face supérieure des tiroirs (29) sur des rouleaux (25), dont les axes sont disposés horizontalement dans le sens transversal du dispositif de stockage (21).

15. Dispositif selon la revendication 14, **caractérisé en ce que** les rouleaux (25) superposés sont de préférence décalés dans les tiroirs (29) superposés du dispositif de stockage (21).

16. Dispositif selon l'une quelconque des revendications 12 à 15, **caractérisé en ce que** le dispositif de chargement (22) comporte une table de pose (23) sur laquelle sont posés les panneaux de verre résiduels (16) et/ou les panneaux de verre bruts (15).

17. Dispositif selon la revendication 16, **caractérisé en ce que** les panneaux de verre résiduels (16) et/ou les panneaux de verre bruts (15) sont posés sur des rouleaux (25) sur la table de pose (23).

18. Dispositif selon l'une quelconque des revendications 12 à 17, **caractérisé en ce que** le dispositif de chargement (22) est disposé entre deux dispositifs de support (21), un dispositif de stockage (21) étant disposé au-dessus du dispositif de coupe (36) et l'autre dispositif de stockage (21) étant disposé au-dessus du dispositif de séparation (7).

19. Dispositif selon l'une quelconque des revendications 12 à 18, **caractérisé en ce qu'**en dessous du dispositif de stockage (21) est prévu un dispositif de levage (27), sur lequel les panneaux de verre résiduels (16) venant du dispositif de chargement (22) sont posés et peuvent être introduits dans le dispositif de coupe (36).

20. Dispositif selon une ou plusieurs des revendications 12 à 19, **caractérisé en ce que** le dispositif de chargement (22) comporte une table de réception supérieure (31) et une table de réception inférieure (32).

21. Dispositif selon une ou plusieurs des revendications 12 à 20, **caractérisé en ce que** le dispositif de chargement (22) comporte au moins trois tables de réception (23).

22. Dispositif selon l'une quelconque des revendications 16 à 21, **caractérisé en ce que** les tables de réception (23, 31, 32) sont actionnées individuellement ou conjointement.

23. Dispositif selon l'une quelconque des revendications 16 à 22, **caractérisé en ce que** sur les tables de réception (23, 31, 32) sont disposés des rouleaux non actionnés et un organe de préhension (26), des rouleaux actionnés ou au moins une bande transporteuse sur des bras en porte-à-faux (23a) pour le transport des panneaux de verre bruts (15) et/ou des panneaux de verre résiduels (16), les bras en porte-à-faux (23a) étant fixés perpendiculairement à un portique (22a).

24. Dispositif selon l'une quelconque des revendications 16 à 23, **caractérisé en ce qu'**au moins une table de réception (23, 31, 32) s'engage en dessous du niveau de la face supérieure du dispositif de transport ou de la table de pose du dispositif de coupe (36).

25. Dispositif selon la revendication 24, **caractérisé en ce que** le dispositif de transport du dispositif de coupe (36) est formé par des bandes transporteuses ou par des rouleaux de transport actionnés, disposés les uns derrière les autres dans le sens longitudinal du dispositif de coupe (36), lesquels comportent des dégagements dans le sens longitudinal et de préférence un dégagement (37) dans le sens transversal.

26. Dispositif selon la revendication 25, **caractérisé en ce que** les bras en porte-à-faux (23a) des tables de réception (23, 31, 32) peuvent être déplacés entre les dégagements dans le sens longitudinal du dispositif de transport et, de préférence, dans un dégagement (37) dans le sens transversal du portique (22a) des tables de réception (23, 31, 32).

27. Dispositif selon l'une quelconque des revendications 12 à 26, **caractérisé en ce qu'**au moins deux dispositifs de coupe (36) avec un dispositif de transfert (3), de préférence sous forme de portique de transfert (3) ou de table basculante (35) mobile, sont couplés entre eux pour échanger des panneaux de verre bruts (15) ou des panneaux de verre résiduels (16), de telle sorte qu'en particulier les stockeurs intermédiaires (20) sont mis à disposition pour chacun des dispositif de coupe (6) couplés.

28. Dispositif selon l'une quelconque des revendications 12 à 27, **caractérisé en ce que** le dispositif de chargement (22) est disposé entre deux dispositifs de support (21), un dispositif de stockage (21) étant disposé au-dessus du dispositif de coupe (36) et l'autre dispositif de stockage (21) étant disposé au-dessus du dispositif de séparation (7).

29. Dispositif selon l'une quelconque des revendications 12 à 28, **caractérisé en ce que** le dispositif de stockage (21) est positionné à un emplacement quelconque, mais de préférence au-dessus du dispositif de coupe (36).

30. Dispositif selon l'une quelconque des revendications 12 à 29, **caractérisé en ce que** le dispositif de chargement (22) est disposé devant le dispositif de coupe (36).

31. Dispositif selon l'une quelconque des revendications 12 à 30, **caractérisé en ce qu'**il est prévu au moins un dispositif de levage (27), sur lequel les panneaux de verre résiduels (16) ou les panneaux de verre bruts (15) venant du dispositif de chargement (22) sont posés et peuvent être introduits dans le dispositif de coupe (36).

32. Dispositif selon la revendication 31, **caractérisé en ce que** le dispositif de levage (27) s'engage en dessous du niveau de la face supérieure du dispositif de transport du dispositif de coupe (36).

33. Dispositif selon la revendication 31 et/ou 32, **caractérisé en ce que** la zone de pose du dispositif de levage (27) est formée par des longerons individuels, qui peuvent être déplacés dans le sens longitudinal du dispositif de coupe (36) dans les dégagements du dispositif de transport.
